Europäisches Patentamt

European Patent Office

Office européen des brevets

(11) Publication number: **0 025 974**
**A1**

(12) # EUROPEAN PATENT APPLICATION

(21) Application number: **80105571.6**

(22) Date of filing: **17.09.80**

(51) Int. Cl.³: **F 02 C 6/00**
**H 02 K 7/18, F 16 H 1/48**
**F 25 J 1/00**

(30) Priority: **21.09.79 US 77686**

(43) Date of publication of application:
**01.04.81 Bulletin 81/13**

(84) Designated Contracting States:
**BE DE FR GB IT NL SE**

(71) Applicant: **AIR PRODUCTS AND CHEMICALS, INC.**
**P.O. Box 538**
**Allentown, Pennsylvania 18105(US)**

(72) Inventor: **Jepsen, Robert Edward**
**335 Berger Street**
**Emmaus, PA 18049(US)**

(74) Representative: **Dres. Kador & Klunker**
**Corneliusstrasse 15**
**D-8000 München 5(DE)**

(54) Intermediate gearing between a machine for fluids and an electric machine.

(57) An expander turbine coupled to auxialiary equipment, e.g. electrical generator, utilizing a single bearing to support the expander turbine wheel shaft and two bearings to support the generator rotor. The turbine wheel shaft is coupled to the generator rotor by means of planetary gearing which also maintains the position and alignment of the turbine wheel shaft resulting in a compact, simplified coupling providing greater net power recovery from the turbine wheel shaft and greater operating reliability. The apparatus can also be used between an electric motor and a fluid compressor or pump.

EP 0 025 974 A1

./...

FIG.1

TITLE MODIFIED
see front page

212-P-02487EP

INTERMEDIATE GEARING FOR GENERATOR LOADED EXPANDER

TECHNICAL FIELD

This invention relates to turbines for cooling a gas by expansion wherein as the gas expands a turbine wheel is rotated producing work on a shaft which work can be utilized to drive an auxiliary piece of equipment, such as a motor or a generator. In a conventional air plant wherein gaseous products such as oxygen and nitrogen are produced by liquefaction and fractionating of the liquefied air, expansion turbines are used to cool the incoming air. Work produced on the turbine shaft is utilized to drive auxiliary generators to provide part of the electrical requirements for the plant.

BACKGROUND OF PRIOR ART

The most common method of coupling a turbine wheel shaft to an auxiliary piece of equipment such as an electrical generator is by means of long quill shafts and the like.

It is known to use a single shaft on which is mounted a turbine generator and a governor for a locomotive engine. This apparatus would be unsuited for an expansion engine operating at cryogenic temperatures.

Fluid driven generators using an expander wheel coupled to the generator through various types of intermediate gearing are also known.

Turbine driven generators have been used in a gas producing plant where the turbine is coupled to the electrical generator through a stageless gear arrangement.

An engine starter and generator combination wherein the main turbine engine is coupled to the generator by means of planetary gearing and a self-propelled rail car with a turbine driven motor generator employing planetary gearing for speed control have been disclosed in the art.

## BRIEF SUMMARY OF THE INVEINTION

In order to provide a simplified, compact coupling to utilize work produced by a shaft coupled to an expander turbine rotated during the expansion of a gas, it has been discovered that the shaft adjacent to the turbine wheel can be supported by a conventional bearing while the other end of the shaft is supported by a planetary gearing system which planetary gearing system is in turn coupled to a driven shaft of an auxiliary piece of equipment such as an electrical generator.

The planetary gearing provides for elimination of a bearing on the one end of the turbine wheel shaft while permitting reduced space for coupling the turbine wheel shaft to the generator shaft. Thus, the equipment is simplified, bearing losses are reduced and most importantly, critical alignment of shafts rotating at high speeds is eliminated all with a greater net power recovery on the driven shaft.

## BRIEF DESCRIPTION OF DRAWINGS

Figure 1 is a top plan view, partially in section of an apparatus according to the present invention.

Figure 2 is a front elevational view of an alternate embodiment of the coupling apparatus according to the present invention.

Figure 3 is a schematic representation of the planetary gear arrangement of Figure 2.

## DESCRIPTION OF THE PREFERRED EMBODIMENT

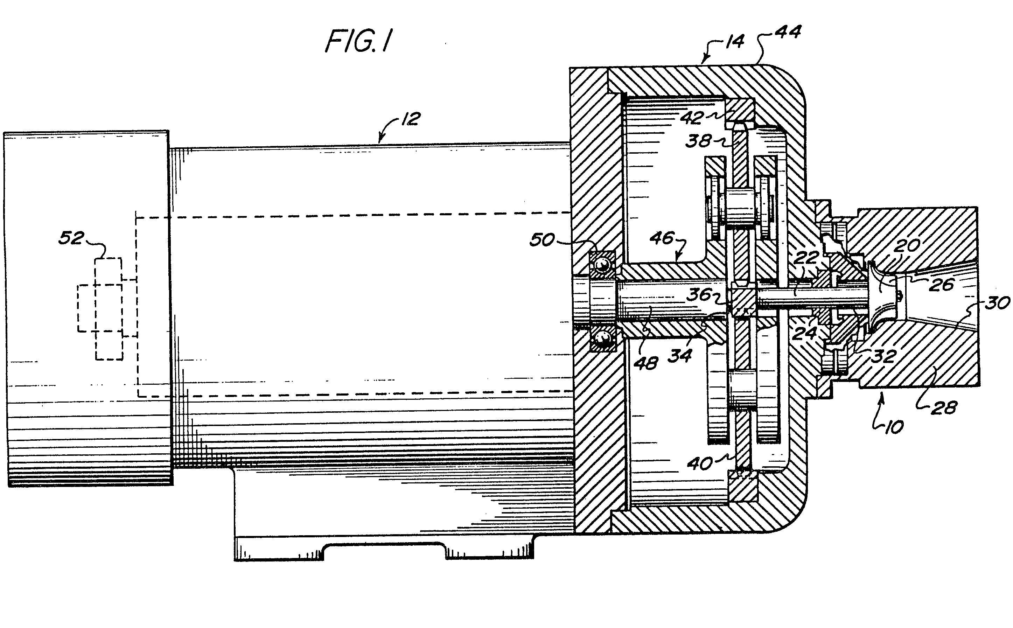

Referring to Figure 1, an expansion turbine 10 is coupled to an electrical generator 12 by means of an intermediate gear case 14. The expansion turbine 10 is of the conventional type including a turbine wheel 20 mounted on a shaft 22, shaft 22 supported by conventional high speed bearing 24 as is well known in the art. Turbine wheel 20 rotates by an exchange of momentum caused by gas flowing over a series of vanes 26 on turbine wheel 20. Lower pressure gas flows outwardly of the expander body 28 through diffuser or discharge conduit 30. Expander turbine 10 includes conventional labyrinth seals 32 as are well known in the art.

The free end 34 of shaft 22 contains a sun gear 36 mounted for rotation with shaft 22. Sun gear 36 meshes with planetary gears 38, 40 there being at least three planetary gears in the planetary gear system. Planetary gears 38,40 in turn mesh with a ring gear 42 which is fixed to the housing 44 of gear case 14. Planetary gears 38 and 40 are supported by carrier 46 which is in turn, fixed to shaft 48 of generator 12. Shaft 48 is supported by a first bearing assembly 50 and a second bearing assembly 52 so that the generator shaft 48 can be rotated and electrical energy produced by generator 12 as is well known in the art.

As is shown in Figure 1, the housing of expander 10, the housing 44 of gear case 14 and the housing of generator 12 are precision aligned by rabbit fits and are bolted together (not shown) so as to form one integral unit. An assembly of this type eliminates the need for couplings and high speed quill shafts that are necessary in conventional apparatus.

With an apparatus according to Figure 1, the ring gear 42 is fixed to the housing and the planet gears 38 and 40, along with a third planet gear (not shown), are free to rotate about two axes defined as the axis of each planet gear and the axis of shaft 22. As the planets rotate the speed of shaft 22 is changed to an acceptable speed for loading generator shaft 48. As is shown in Figure 1, only one journal bearing 24 is required for expander shaft 22. The projecting end 34 of expander shaft 22 is kept in alignment by the planetary gear system described.

The decision to fix the ring gear and rotate the planet gears or vice versa is determined by the speed ratios desired and other engineering considerations, there being many variations for given applications.

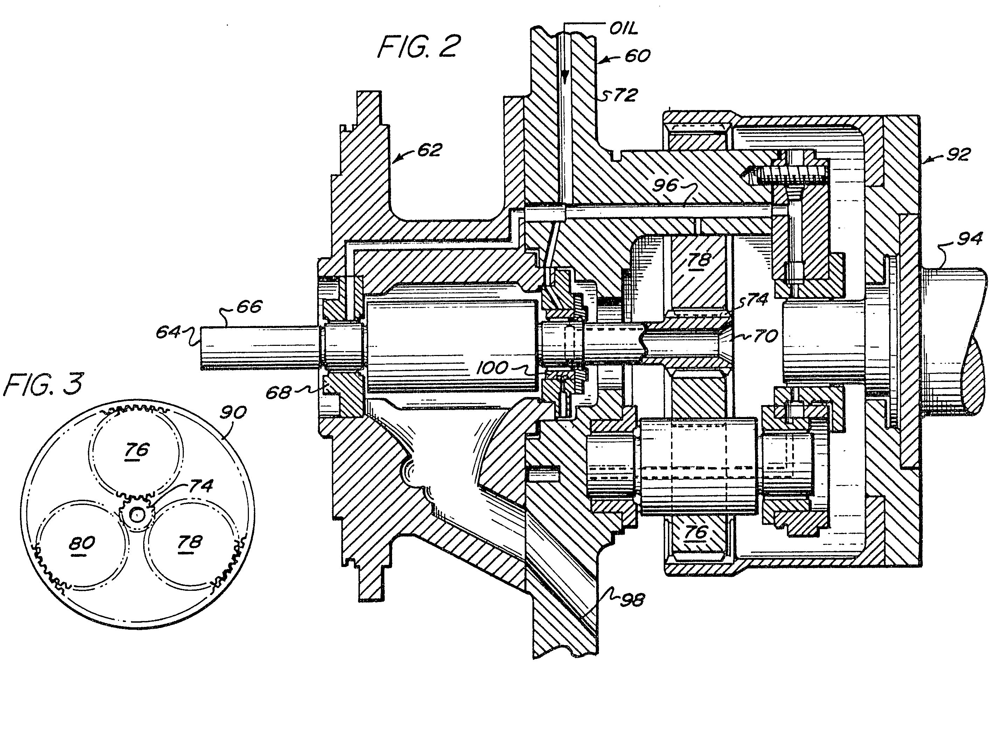

In the apparatus of Figure 2 and 3, gear case 60 is affixed to expander 62 so that the end 64 of turbine wheel shaft 66 containing the turbine wheel (not shown) is mounted in bearing assembly 68 as described above. The end 70 of shaft 66 opposite to the turbine wheel projects into the housing 72 of gear case 60 and has mounted thereon sun gear 74. As shown in Figure 3, sun gear 74 is mounted for meshing with planetary gears 76, 78 and 80 which in turn mesh with ring gear 90. In the embodiment of Figures 2 and 3, planetary gears 76, 78 and 80 are mounted for rotation about their own axis and ring gear 90 is mounted for rotation about an axis defined by the longitudinal axis of shaft 66. Planet gears 76, 78 and 80 are in turn mounted on a planet carrier 92 which in turn is mounted on a generator shaft 94 for transmitting rotation from shaft 66 to shaft 94.

The apparatus of Figure 2 includes the necessary oil passages 96 and return 98 for circulating lubricating oil to the shafts and gears.

In the apparatus of Figure 2 there is optionally provided a snubber bearing 100 with large clearances which is included as a safety device to limit the excursion of the shaft under no-load conditions.

However, with an apparatus such as disclosed in Figure 2 it is highly unlikely to be operated under no-load conditions.

From the foregoing it is apparent that to couple the shaft of an expansion turbine to an auxiliary piece of equipment such as an electrical generator requires a total of three bearings. The sun gear acts as a bearing when mounted for rotation in the planetary gear setting. It is well known that a conventional train for coupling an expansion turbine to an electrical generator requires at least six bearings. With increasing numbers of bearings there is an increased amount of energy loss and thus, there is less net power recovery.

As set out above, an apparatus according to the present invention, simplifies the equipment required, reduces the bearing losses, thus providing greater net power recovery, eliminates the critical alignment of high speed shafts and provides greater reliability since couplings and high speed quill shafts are eliminated and lastly, reduces the space requirements. In addition, reliability is enhanced because of built-in permanent alignment and fewer parts to wear or fail.

An apparatus, according to the invention, can have various gear ratios between the expander and the auxiliary equipment thus optimizing expander efficiency while conforming to conventional generator speeds. Compound gear arrangements can be used to achieve the desired ratios as can staged planetary gear arrangements as is known in the art. It is also within the scope of the invention to use flexible coupling between the planetary output and the auxillary equipment. An apparatus, according to the invention, can also be used between an electric motor and a fluid compressor or pump.

Having thus described my invention, what is desired to be secured by Letters Patent of the United States is set out in the appended claims.

I Claim:

1. In a turbine for cooling a gas by expansion of the type comprising a casing, a turbine wheel in said casing, a shaft with one end connected with said turbine wheel and the other end adapted for connection to drive auxiliary equipment, e.g. electrical generator, the improvement characterized by:

means for coupling said shaft to said generator, said means including a sun gear affixed to the end of said shaft opposite said turbine wheel, said sun gear mounted for meshing with a plurality of planetary gears which in turn mesh with a ring gear said means adapted in conjunction with a single bearing supporting said shaft to maintain precision alignment of said shaft during rotation.

2. An apparatus according to Claim 1 wherein there are at least three planetary gears.

3. An apparatus according to Claim 1 wherein said planetary gears are fixed to rotate about a fixed axis and said ring gear rotates for coupling to and driving said auxiliary equipment.

4. An apparatus according to Claim 1 wherein said ring gear is fixed to a gear housing between said auxiliary piece of equipment and said turbine and said planetary gears are mounted for rotation with said shaft to drive said auxiliary equipment.

5. An apparatus according to Claim 1 wherein said means for coupling said shaft to said generator includes a flexible coupling between the output of said planetary gears and said generator.

6. In an electrical generator driven by an expansion turbine used to cool a gas by expansion of the type wherein the generator shaft is coupled to the expansion turbine shaft the improvement comprising:

a sun gear affixed to an end of a shaft having as its other end a turbine wheel, said sun gear mounted for meshing with a plurality of planetary gears which in turn mesh with a ring gear;

means to couple either said planetary gears or said ring gear to the generator shaft whereby both ends of said generator shaft and one end of the turbine wheel shaft need be supported by bearings, said turbine shaft kept in alignment by said sun gear, said planetary gears and said ring gear.

7. An apparatus according to Claim 6 wherein there are at least three planetary gears.

8. An apparatus according to Claim 6 wherein said coupling means includes planetary gears fixed to rotate about a fixed axis and said ring gear is coupled to said generator shaft.

9. An apparatus according to Claim 6 wherein said ring gear is fixed to a gear housing between said expander and said generator and said planetary gears are mounted for rotation with said expander shaft and coupled to said generator shaft.

10. An apparatus according to Claim 6 wherein said means to couple said planetary gears or said ring gear to said generator shaft includes a flexible coupling between said planetary gears or said ring gear and said generator shaft.

FIG.1

1/2

FIG. 2

OIL

60

72

62

92

94

96

78

66

64

74

70

68

100

2/2

FIG. 3

90

76

74

80

78

76

98

0025974

European Patent Office

**EUROPEAN SEARCH REPORT**

0025974

EP 80105571.6

| Category | Citation of document with indication, where appropriate, of relevant passages | Relevant to claim |
|---|---|---|
| | DE - B - 1 086 127 (HENSCHEL)<br>+ Totality +<br>-- | 1-4, 6-9 |
| | AT - B - 245 715 (CKD PRAHA)<br>+ Fig. 1; page 1, line 35 - page 2, line 16 +<br>-- | 1-3, 6-8 |
| | PATENT ABSTRACTS OF JAPAN, unexamined applications, Section E, Vol. 3, No. 61, May 26, 1979<br>The Patent Office Japanese Government, page 36 E 113<br>+ Kokai-Nr. 54-39810 (MITSUBISHI DENKI)<br>-- | 1,2,4, 6,7,9 |
| | DE - A1 - 2 719 568 (ELECTRIC POWER)<br>+ Pages 6-8; fig. +<br>-- | 1,2,4, 6,7,9 |
| A | US - A - 3 632 222 (AVCO)<br>+ Totality +<br>-- | 1,6 |
| A | AT - B - 257 313 (BETEILIGUNGS- UND PATENTVERWALTUNGSGESELLSCHAFT)<br>+ Fig. 1,4; pages 1,2 +<br>-- | 1-10 |
| A | DE - A1 - 2 648 147 (STAL-LAVAL)<br>+ Totality +<br>-- | 1,6 |

**CLASSIFICATION OF THE APPLICATION (Int. Cl.)**

F 02 C 6/00
H 02 K 7/18
F 16 H 1/48
F 25 J 1/00

**TECHNICAL FIELDS SEARCHED (Int.Cl.)**

F 02 C 1/00
F 02 C 6/00
F 02 C 7/00
F 02 C 15/00
H 02 K 7/00
F 16 H 1/00
F 25 J 1/00
F 25 J 3/00
F 25 J 5/00
F 01 D 15/00
F 01 K 15/00
F 04 D 13/00
F 04 D 25/00
F 04 D 29/00

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

X The present search report has been drawn up for all claims

| Place of search | Date of completion of the search | Examiner |
|---|---|---|
| VIENNA | 21-11-1980 | KUTZELNIGG |

EPO Form 1503.1 06.78

| Category | Citation of document with indication, where appropriate, of relevant passages | Relevant to claim |
|---|---|---|
| | | |
| A | GB - A - 929 323 (ASSOCIATED ELECTRICAL) <br><br> + Totality + <br><br> -- | 5,10 |
| A | GB - A - 948 864 (A.C.E.C.) <br><br> + Totality + <br><br> ---- | 1,2,4, 6,7,9 |

**CLASSIFICATION OF THE APPLICATION (Int. Cl.) 3**

**TECHNICAL FIELDS SEARCHED (Int. Cl.) 3**

EP 80105571.6

EPO Form 1503.2  06.78